# EUROPEAN PATENT SPECIFICATION

(11) **EP 4 046 082 B1**
(45) Date of publication and mention of the grant of the patent: **11.11.2026**
(21) Application number: 20821527.7
(22) Date of filing: 16.11.2020
(51) Int. Cl.: G06N 10/70

(54) **REDUCING ERRORS WITH CIRCUIT GAUGE SELECTION**
VERRINGERUNG VON FEHLERN MIT SCHALTKREISMESSERAUSWAHL
RÉDUCTION D'ERREURS AVEC SÉLECTION DE JAUGE DE CIRCUIT

(30) Priority: 18.11.2019 US 201962936753 P
(43) Date of publication of application: 24.08.2022
(73) Proprietor: Google LLC, Mountain View, CA 94043 (US)
(72) Inventor: MCCLEAN, Jarrod Ryan, Mountain View, California 94043 (US); BOIXO CASTRILLO, Sergio, Mountain View, California 94043 (US); GIDNEY, Craig, Mountain View, California 94043 (US); SMELYANSKIY, Vadim, Mountain View, California 94043 (US)
(74) Representative: Thorniley, Peter
(86) International application number: PCT/US2020/060685
(87) International publication number: WO 2021/101829

(56) References cited:
- KECHEDZHI K ET AL: "Effective quantum volume, fidelity and computational cost of noisy quantum processing experiments", ARXIV.ORG, CORNELL UNIVERSITY LIBRARY, 201 OLIN LIBRARY CORNELL UNIVERSITY ITHACA, NY 14853, 28 June 2023 (2023-06-28), XP091549784
- ABHINAV KANDALA ET AL: "Extending the computational reach of a noisy superconducting quantum processor", ARXIV.ORG, CORNELL UNIVERSITY LIBRARY, 201 OLIN LIBRARY CORNELL UNIVERSITY ITHACA, NY 14853, 11 May 2018 (2018-05-11), XP081139105, DOI: 10.1038/S41586-019-1040-7
- SONG CHAO ET AL: "Quantum computation with universal error mitigation on a superconducting quantum processor", SCIENCE ADVANCES, vol. 5, no. 9, 6 September 2019 (2019-09-06), XP055784482, Retrieved from the Internet <URL:https://advances.sciencemag.org/content/5/9/eaaw5686> DOI: 10.1126/sciadv.aaw5686
- DAVID C MCKAY ET AL: "Efficient Z-Gates for Quantum Computing", ARXIV.ORG, CORNELL UNIVERSITY LIBRARY, 201 OLIN LIBRARY CORNELL UNIVERSITY ITHACA, NY 14853, 2 December 2016 (2016-12-02), XP080736464

## Description

### FIELD

The present disclosure relates generally to quantum computing systems.

### BACKGROUND

Quantum computing is a computing method that takes advantage of quantum effects, such as superposition of basis states and entanglement to perform certain computations more efficiently than a classical digital computer. In contrast to a digital computer, which stores and manipulates information in the form of bits, e.g., a "1" or "0," quantum computing systems can manipulate information using quantum bits ("qubits"). A qubit can refer to a quantum device that enables the superposition of multiple states, e.g., data in both the "0" and "1" state, and/or to the superposition of data, itself, in the multiple states. In accordance with conventional terminology, the superposition of a "0" and "1" state in a quantum system may be represented, e.g., as a |0〉 + b |1〉 The "0" and "1" states of a digital computer are analogous to the |0〉 and |1〉 basis states, respectively of a qubit.

ABHINA V KANDA LA ET AL: "Extending the computational reach of a noisy superconducting quantum processor", ARXIV. ORG, CORNELL UNIVERSITY LIBRARY, 201 OLIN LIBRARY CORNELL UNIVERSITY ITHACA, NY 14853, 11 May 2018, XP081139105, describes that recent theoretical work has shown that the accuracy of computation based off expectation values of quantum observables can be enhanced through an extrapolation of results from a collection of varying noisy experiments. SONG CHAO ET AL: "Quantum computation with universal error mitigation on a superconducting quantum processor", SCIENCE ADVANCES, vol . 5, no. 9, 6 September 2019, XP055784482, describes an error mitigation protocol based on gate set tomography and quasiprobability decomposition. One- and two-qubit circuits are tested on a superconducting device, and computation errors are successfully suppressed. DAVID C MCKAY ET AL: "Efficient Z-Gates for Quantum Computing", ARXIV.ORG, CORNELL UNIVERSITY LIBRARY, 201 OLIN LIBRARY CORNELL UNIVERSITY ITHACA, NY 14853, 2 December 2016, XP080736464, describes that for superconducting qubits, microwave pulses drive rotations around the Bloch sphere. The phase of these drives can be used to generate zero-duration arbitrary "virtual" Z-gates which, combined with two X_{π/2} gates, can generate any SU(2) gate. Here is it shown how to best utilize these virtual Z-gates to both improve algorithms and correct pulse errors.

### SUMMARY

Aspects and advantages of embodiments of the present disclosure will be set forth in part in the following description, or can be learned from the description, or can be learned through practice of the embodiments.

One example aspect of the present disclosure is directed to a method for noise error mitigation for a quantum computing system according to claim 1.

Another example aspect of the present disclosure is directed to a method for noise error mitigation for a quantum according to claim 3.

Another example aspect of the present disclosure is directed to a quantum computing system according to claim 12.

Other aspects of the present disclosure are directed to a computer-readable medium according to claim 13 and a computer program according to claim 14.

The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts an example quantum computing system according to example embodiments of the present disclosure;
FIG. 2 depicts an example circuit gauge incorporating one or more Clifford gates into a quantum circuit according to example aspects of the present disclosure;
FIG. 3 depicts an example circuit gauge incorporating Clifford and non-Clifford gates into a quantum circuit according to example aspects of the present disclosure;
FIG. 4 depicts an example circuit gauge incorporating Clifford and non-Clifford gates into a quantum circuit according to example aspects of the present disclosure;
FIG. 5 depicts a flow diagram of an example method according to example aspects of the present disclosure; and
FIG. 6 depicts a flow diagram of an example method according to example aspects of the present disclosure.

### DETAILED DESCRIPTION

Generally, the present disclosure is directed to systems, devices, and methods which can allow for improved error mitigation techniques to be implemented in quantum computing systems in order to reduce the impact of noise during state measurement. Either a multi-point extrapolation scheme is used, or a single-point full depolarizing error mitigation scheme requiring only quantum circuit measurement data obtained while implementing one or more circuit gauges and an estimate of the fidelity of the quantum circuit is used to improve the accuracy of quantum calculations, such as noisy-intermediate scale quantum (NISQ) calculations.

More particularly, a quantum system includes one or more quantum system qubits. The quantum system is configured to implement one or more circuit gauges using a plurality of quantum circuits. Each quantum circuit includes a plurality of quantum gates, and each of the quantum circuits is an equivalent logical operation as each of the other quantum circuits. Each of the quantum circuits is implemented by a different sequence of quantum gates. By selecting logically equivalent quantum circuits implemented using different sequences of quantum gates, the noise observed in the quantum circuits during measurement can be randomized.

A quantum measurement circuit implemented in the quantum computing system can perform a plurality of measurements (e.g., state measurements) on the quantum circuits. The measurements can be performed in parallel for each qubit in the quantum system. For example, a readout resonator can be configured to obtain a measurement of each qubit in the quantum system.

An estimated average value of an observable of interest 〈*O*〉*_{f}* for the quantum circuits can be determined based at least in part on the plurality of measurements. An error mitigation scheme for the quantum computing system can then be implemented based at least in part on the average value of the observable of interest 〈*O*〉*_{f}.*

For example, in some implementations, the one or more circuit gauges implemented by the quantum system can include one or more randomized circuit gauges. For example, the one or more randomized circuit gauges can be implemented by injecting one or more random pairs of Pauli operators or single qubit gates into a quantum circuit during free space or combined with already present gates in a quantum circuit (e.g., such as idle time where quantum circuits are not acting on qubits during moments of gates). The random pair of Pauli operators or other single qubit gates can be equivalent to the identity (e.g., they are self-inverse), and can be commuted through adjacent gates until the free space is filled. By commuting the random pair of Pauli operators through a quantum gate (or gates), an equivalent logical operation can be performed but implemented in a different Gauge, such as a Pauli Gauge. The Pauli operators can be commuted through either a subset or all quantum gates in a quantum circuit.

In some implementations, the one or more random pairs of Pauli operators can be injected by incorporating one or more Clifford gates into the quantum circuits. In some implementations, the one or more random pairs of Pauli operators can be injected by incorporating one or more non-Clifford gates into the quantum circuits.

According to additional aspects of the present disclosure, in some implementations, a single-point full depolarizing error mitigation scheme can be implemented using original measurement data and an approximation of the fidelity f of a quantum circuit. In a single-point full depolarizing error mitigation scheme, additional measurements at different error levels, such as those used in multi-point extrapolation error mitigation schemes, are not required.

To implement the single-point full depolarizing error mitigation scheme, an approximation for the circuit fidelity f for the one or more circuit gauges is determined.
For example, in some implementations, cross entropy benchmarking for a similar circuit structure can be used to determine an approximation for the circuit fidelity *f*. In some implementations, the approximation for the circuit fidelity *f* can be estimated based at least in part on counting only the number of single and two qubit gates.

An inferred average value of the observable 〈*O*〉*_{ψ}* is then be determined based at least in part on the average value of the observable of interest 〈*O*〉*_{f}* and the approximation of the circuit fidelity *f*. For example, the inferred average value of the observable 〈*O*〉*_{ψ}* can be determined using the formula ${\left〈O\right〉}_{f} = f {\left〈O\right〉}_{ψ} + \frac{\left(1-f\right)}{{2}^{n}} Tr \left[O\right]$*,* where *O* is a desired observable and $\frac{\left(1-f\right)}{{2}^{n}} Tr \left[O\right]$ comprises a component attributable to noise.

The single-point full depolarizing error mitigation scheme provided herein can provide several advantages over other error mitigation schemes. For example, as additional sample points are not required, the raw number of required samples can be decreased, which can help to avoid the difficulty of converging to similar accuracies at several different points before extrapolation as in multi-point extrapolation schemes. Further, complications associated with operating a device near the limit of its capabilities can be avoided, as increasing error beyond a threshold for obtaining a reasonable signal can cause an extrapolation scheme to become unstable.

In some implementations, a multi-point extrapolation scheme can be implemented using the one or more circuit gauges. For example, a noise injection method and a plurality of extrapolation points can be selected. Each of the extrapolation points can be evaluated with a different random circuit gauge. For example, one or more additional Clifford gates and one or more corresponding inverses of the one or more additional Clifford gates can be implemented during each of the one or more circuit gauges. Extrapolation can then be performed to obtain an improved inferred value of the observable *O*.

In some implementations, a circuit gauge can be selected to encourage a preferred error direction, which can be biased or unbiased based on the quantum error correcting code and a decoder's optimal operating regime. For example, existing errors can be biased in a preferred direction during at least one of the one or more circuit gauges and an error correcting code can be used to correct the known error type.

Aspects of the present disclosure can provide a number of technical effects and benefits and can provide improvements to quantum computing technology. For example, the single-point full depolarizing error mitigation scheme according to example aspects of the present disclosure can be used to perform extrapolation using a single-point estimate by leveraging knowledge that a circuit gauge was randomly selected. Further, this error mitigation scheme can reduce the amount of sampling required as compared to other extrapolation error mitigation schemes (e.g. multi-point error mitigation schemes). Further, the single-point full depolarizing error mitigation scheme can remove the possibility of instabilities related to taking measurements at increased noise levels.

Additional technical effects and benefits of the present disclosure include allowing for dense packing of quantum circuits by Pauli operator injection and commutation, which can be used for both Clifford and non-Clifford gates. This in turn can allow for randomized circuit gauges to be used to be used to randomize noise obtained during quantum circuit measurement, thereby allowing for noise observed to more closely resemble a completely depolarizing channel.

The systems and methods of the present disclosure also provide for different combinations of circuit gauges (e.g., randomized circuit gauges and/or preferred error direction circuit gauges) to be used with other error mitigation schemes, such as multi-point extrapolation schemes and error correction code. This can allow for improved error mitigation performance, such as in the use of error correction code in quantum computing systems.

The systems and methods of the present disclosure can allow for improved noise mitigation in quantum computing system. For example, by more accurately compensating for noise in observed measurements, measurement accuracy can be improved, allowing for more accurate quantum computing systems

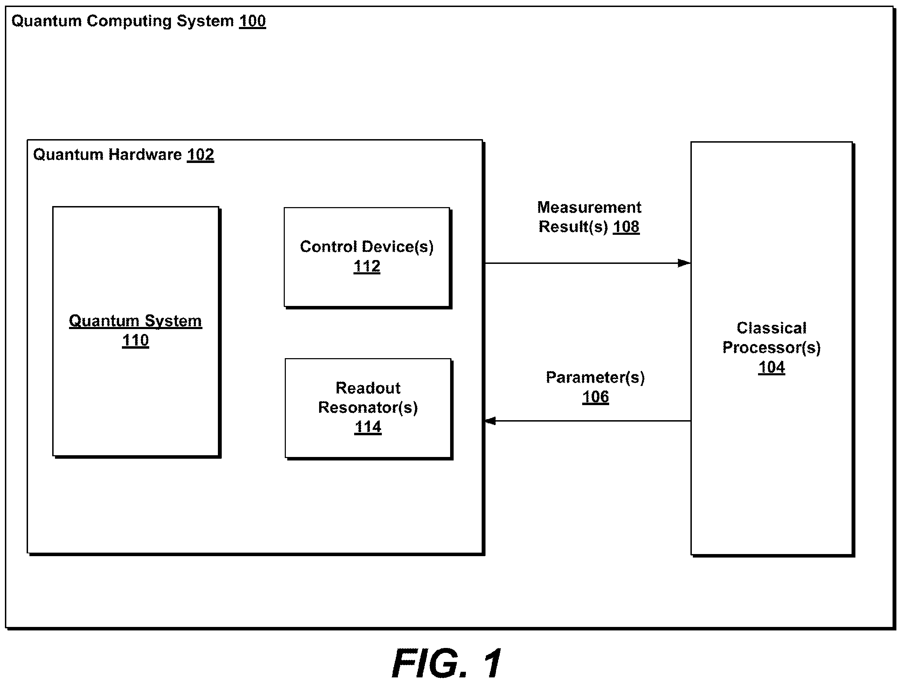

With reference now to the FIGS., example aspects of the present disclosure will be discussed in further detail. FIG. 1 depicts an example quantum computing system 100. The example system 100 is an example of a system implemented as classical or quantum computer program on one or more classical computers or quantum computing devices in one or more locations, in which the systems, components, and techniques described below can be implemented. FIG. 1 depicts an example quantum computing system 100 that can be used to implement aspects of the present disclosure. Those of ordinary skill in the art, using the disclosures provided herein, will understand that other quantum computing structures or system can be used without deviating from the scope of the present disclosure.

The system 100 includes quantum hardware 102 in data communication with one or more classical processors 104. The quantum hardware 102 includes components for performing quantum computation. For example, the quantum hardware 102 includes a quantum system 110, control device(s) 112, and readout resonator(s) 114. The quantum system 110 can include one or more multi-level quantum subsystems, such as a register of qubits. In some implementations, the multi-level quantum subsystems can include superconducting qubits, such as flux qubits, charge qubits, transmon qubits, etc. In some implementations, the multi-level quantum subsystems can include one or more qudits (e.g., units of quantum information described by superposition of D states). In some implementations, the multi-level quantum subsystems can include fermionic quantum subsystems.

The type of multi-level quantum subsystems that the system 100 utilizes may vary. For example, in some cases it may be convenient to include one or more readout resonators 114 attached to one or more superconducting qubits, e.g., transmon, flux, Gmon, Xmon, or other qubits. In other cases ion traps, photonic devices or superconducting cavities (with which states may be prepared without requiring qubits) may be used. Further examples of realizations of multi-level quantum subsystems include fluxmon qubits, silicon quantum dots or phosphorus impurity qubits.

Quantum circuits may be constructed and applied to the register of qubits included in the quantum system 110 via multiple control lines that are coupled to one or more control devices 112. Example control devices 112 that operate on the register of qubits include quantum logic gates or circuits of quantum logic gates, e.g., Clifford gates (such as Hadamard gates, controlled-NOT (CNOT) gates, phase gates) and non-Clifford gates (such as square root of Z gates, T gates, etc.). The one or more control devices 112 may be configured to operate on the quantum system 110 through one or more respective control parameters (e.g., one or more physical control parameters). For example, in some implementations, the multi-level quantum subsystems may be superconducting qubits and the control devices 112 may include one or more digital to analog converters (DACs) with respective voltage physical control parameters.

The quantum hardware 102 may further include quantum measurement devices, e.g., readout resonators 114. Measurement results 108 obtained via quantum measurement devices may be provided to the classical processors 104 for processing and analyzing. In some implementations, the quantum hardware 102 may include a quantum circuit and the control device(s) 112 and readout resonator(s) 114 (or other quantum measurement devices) may include one or more quantum logic gates that operate on the quantum system 102 through microwave pulse physical control parameters that are sent through wires included in the quantum hardware 102. Further examples of control devices include arbitrary waveform generators, wherein a DAC creates the signal. The control parameters may include qubit frequencies.

The readout resonator(s) 114 (or other quantum measurement devices) may be configured to perform quantum measurements on the quantum system 110 and send measurement results 108 to the classical processors 104. In addition, the quantum hardware 102 may be configured to receive data specifying physical control parameter values 106 from the classical processors 104. The quantum hardware 102 may use the received physical control parameter values 106 to update the action of the control device(s) 112 and readout resonator(s) 114 on the quantum system 110. For example, the quantum hardware 102 may receive data specifying new values representing voltage strengths of one or more DACs included in the control devices 112 and may update the action of the DACs on the quantum system 110 accordingly. The readout resonator(s) 114 can be included in one or more quantum measurement circuit(s) which are operable to perform a plurality of quantum measurements on the quantum system 110.

The classical processors 104 may be configured to initialize the quantum system 110 in an initial quantum state, e.g., by sending data to the quantum hardware 102 specifying an initial set of parameters 106.

The readout resonator 114 (or other quantum measurement device) can take advantage of a difference in the impedance for the |0〉 and |1〉 states of an element of the quantum system, such as a qubit, to measure the state of the element (e.g., the qubit). For example, the resonance frequency of the readout resonator 114 can take on different values when a qubit is in the state |0〉 or the state |1〉, due to the nonlinearity of the qubit. Therefore, a microwave pulse reflected from the readout resonator 114 carries an amplitude and phase shift that depend on the qubit state. In some implementations, a Purcell filter can be used in conjunction with the readout resonator 114 to impede microwave propagation at the qubit frequency.

According to example aspects of the present disclosure, the quantum computing system 100, and more particularly, the quantum system 110 can be configured to implement one or more circuit gauges by implementing a plurality of quantum circuits. For example, each quantum circuit can include a plurality of quantum gates and each of the plurality of quantum circuits can be an equivalent logical operation as each of the other quantum circuits in the plurality. Each of the plurality of quantum circuits, however, can be implemented by a different sequence of quantum gates as compared to each of the quantum circuits in the plurality to thereby implement one or more circuit gauges.

In some implementations, the one or more circuit gauges can include one or more randomized circuit gauges. For example, in some implementations, the one or more randomized circuit gauges can be implemented by injecting one or more random pairs of Pauli operators into the one or more quantum circuits. The Pauli operators can then be propagated through the quantum gates of a quantum circuit, including Clifford and non-Clifford gates.

For example, a pair of Pauli operators may be added to a quantum circuit using the fact that *U*² = *I* for Pauli operators because they are self-inverse. The pair of Pauli operators may then be commuted through the quantum gate to or arrive at an equivalent operation, but implemented in a different Pauli Gauge.

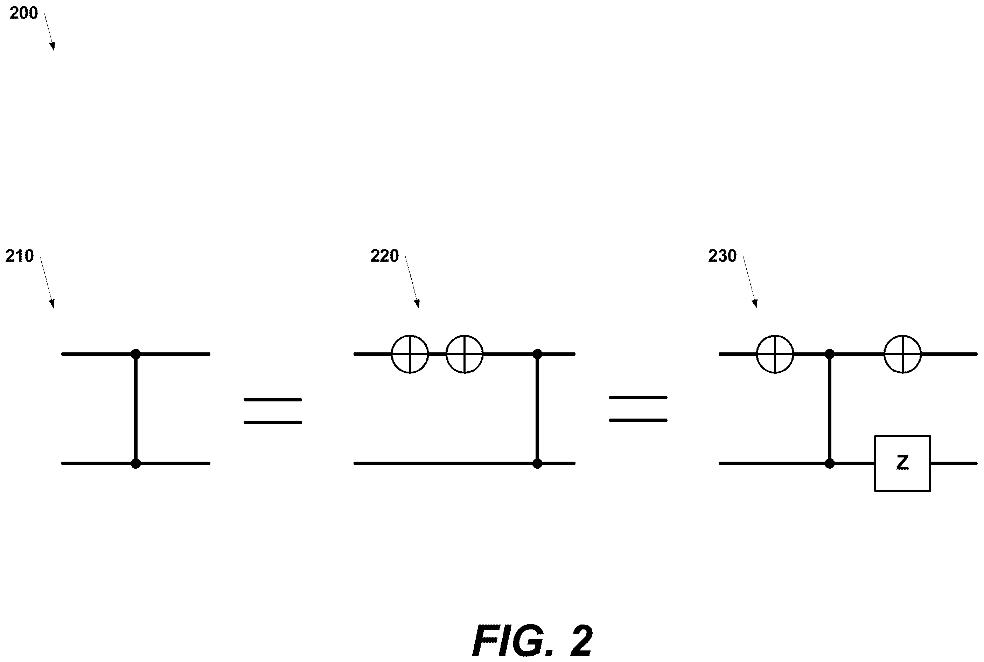

For example, referring now to FIG. 2, an example circuit gauge 200 incorporating one or more Clifford gates into a quantum circuit according to example aspects of the present disclosure is depicted. FIG. 2 depicts an example circuit gauge in which one or more random pairs of Pauli operators are injected into a quantum circuit by incorporating one or more Clifford gates into the quantum circuit.

As shown, the circuit gauge 200 includes three logically equivalent quantum circuits 210, 220, and 230 which are implemented using different sequences of quantum gates.

For example, the first quantum circuit 210 comprises a controlled Z operation, implemented by a Clifford gate on two qubits. The quantum circuit 210 can be expressed as an equation as *C*(*Z*)_{1*,*2}.

The second quantum circuit 220 comprises a logically equivalent operation as the first quantum circuit 210, but the second quantum circuit 220 includes a pair of Pauli *X* operators. The quantum circuit 220 can be expressed as an equation as *C*(*Z*)_{1,2}*X*₁*X*₁.

Similarly, the third quantum circuit 230 comprises a logically equivalent operation as the first quantum circuit 210 and the second quantum circuit 220. However, as shown in FIG. 2, for the third quantum circuit 230, one of the Pauli *X* operators has been commuted through the quantum circuit. The quantum circuit 230 can be expressed as an equation as *X*₁*Z*₂*C*(*Z*)_{1*,*2}*X*₁*.*

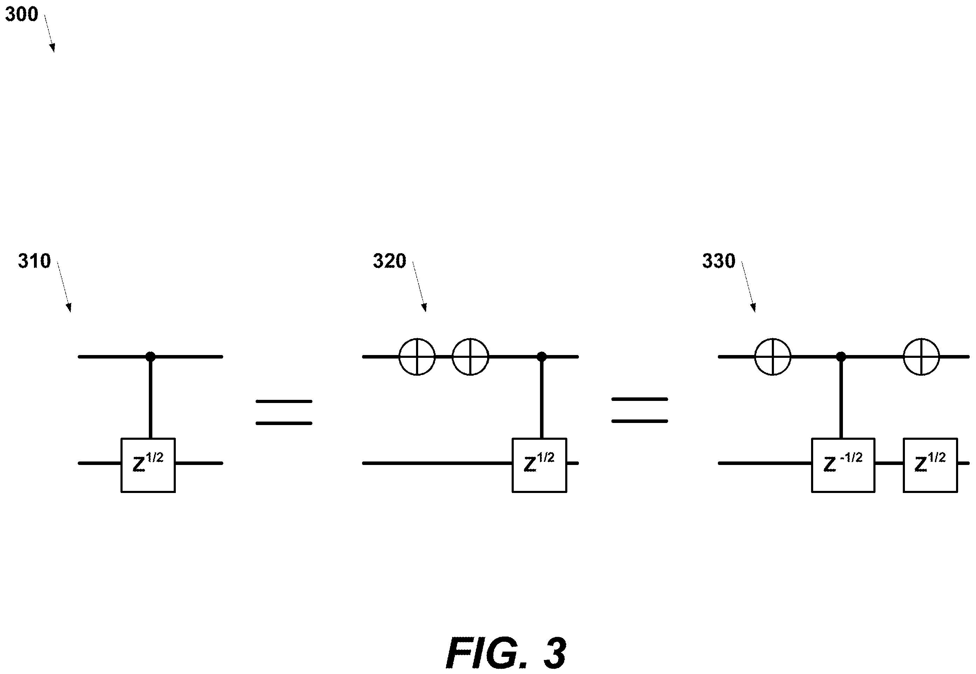

The example randomized circuit gauge techniques of the present disclosure can also be applied to non-Clifford gates. For example, referring to FIG. 3, an example circuit gauge 300 incorporating one or more non-Clifford gates into a quantum circuit according to example aspects of the present disclosure is depicted.

As shown, the circuit gauge 300 includes three logically equivalent quantum circuits 310, 320, and 330 which are implemented using different sequences of quantum gates.

For example, the first quantum circuit 310 comprises a controlled square root of Z operation (also referred to as a controlled phase gate), implemented by a non-Clifford gate on two qubits. The quantum circuit 310 can be expressed as an equation as *C*(*Z*^{1/2})_{1*,*2}.

The second quantum circuit 320 comprises a logically equivalent operation as the first quantum circuit 310, but the second quantum circuit 320 includes a pair of Pauli *X* operators. The quantum circuit 320 can be expressed as an equation as *C*(*Z*^{1/2})_{1*,*2}*X*₁*X*₁.

Similarly, the third quantum circuit 330 comprises a logically equivalent operation as the first quantum circuit 310 and the second quantum circuit 320. However, as shown in FIG. 3, for the third quantum circuit 330, one of the Pauli *X* operators has been commuted through the quantum circuit. The quantum circuit 330 can be expressed as an equation as *X*₁*Z*^{1/2}₂*C*(*Z*^{*-*1/2})_{1,2}*X*₁*.*

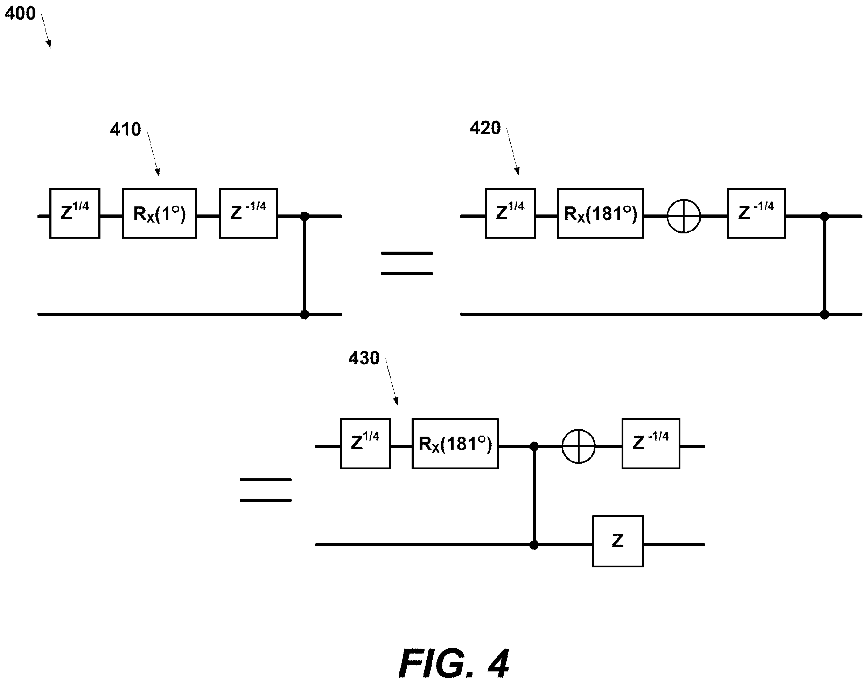

Referring now to FIG. 4, another example circuit gauge 400 incorporating one or more non-Clifford gates into a quantum circuit according to example aspects of the present disclosure is depicted. Similar to FIG. 3, the example circuit gauge 400 includes non-Clifford gates.

As shown, the circuit gauge 400 includes three logically equivalent quantum circuits 410, 420, and 430 which are implemented using different sequences of quantum gates.

For example, the first quantum circuit 410 includes a plurality of logic gates implemented on one or two qubits, including a fourth root of Z gate (also referred to as a T gate), a R_{X}(θ) gate, an inverse fourth root of Z gate (also referred to as an inverse T gate) and a controlled Z gate. The R_{X}(θ) gate is a single-qubit rotation through angle θ around the x-axis. The quantum circuit 410 can be expressed as an equation as $C {\left(Z\right)}_{1 , 2} {Z}_{1}^{- 1 / 4} {R}_{X} {\left(1°\right)}_{1} {Z}_{1}^{1 / 4}$*.*

The second quantum circuit 420 comprises a logically equivalent operation as the first quantum circuit 410, but the second quantum circuit 420 includes a Pauli X operator. The quantum circuit 420 can be expressed as an equation as $C {\left(Z\right)}_{1 , 2} {Z}_{1}^{- 1 / 4} {X}_{1} {R}_{X} {\left(181°\right)}_{1} {Z}_{1}^{1 / 4}$.

Similarly, the third quantum circuit 430 comprises a logically equivalent operation as the first quantum circuit 410 and the second quantum circuit 420. However, as shown in FIG. 4, for the third quantum circuit 430, the Pauli X operator has been commuted through the quantum circuit. The quantum circuit 430 can be expressed as an equation as ${Z}_{1}^{- 1 / 4} {X}_{1} {Z}_{2} C {\left(Z\right)}_{1 , 2} {R}_{X} {\left(181°\right)}_{1} {Z}_{1}^{1 / 4}$.

The example circuit gauges 200-400 depicted in FIGS. 2-4 are example circuit gauges depicting equivalent logical operations for quantum circuits including both Clifford and non-Clifford gates, and are intended for illustrative purposes only. One of ordinary skill in the art will recognize that other circuit gauges can similarly be implemented using additional and/or other quantum gates. Moreover, the circuit gauges and example gauge randomization techniques of the present disclosure can be applied to less conventional quantum gates, like the fermionic simulation gate (FSIM), but with slightly reduced Gauge freedom. For example, in some implementations, pairs of Pauli operators may be propagated across a quantum circuit, while in other implementations, a single Pauli operator may be propagated across the quantum circuit.

Referring again to FIG. 1, a quantum measurement circuit, such as one or more readout resonators 114 or other quantum measurement devices, can obtain a plurality of measurements on the quantum circuits implemented by (e.g., as a part of) one or more circuit gauges. The plurality of measurements can then be used by one or more processors, such as one or more classical processors 104, to implement an error mitigation scheme for the quantum computing system 100.

For example, the one or more processors can determine an average value of an observable of interest 〈*O*〉*_{f}* based at least in part on the plurality of measurements. Further, the one or more processors can implement an error mitigation scheme based at least in part on the average value of the observable of interest 〈*O*〉*_{f}.*

For example, according to example aspects of the present disclosure, in some implementations, a single-point full depolarizing error mitigation scheme can be implemented on the quantum computing system 100. The single-point full depolarizing mitigation scheme can be used, for example, to determine an estimated noiseless value of an observable of interest 〈*O*〉*_{ψ}* for a quantum computing system 100 using only original measurement data and an estimate of a fidelity *f* of the quantum computing system 100. The single-point full depolarizing error mitigation scheme can leverage knowledge that a quantum circuit with sufficiently random circuit gauges follows a noise model that closely resembles a completely depolarizing channel.

For example, a randomized circuit gauge can be implemented by a quantum system and a plurality of measurements performed for each of the quantum circuits of the circuit gauge can be obtained by a quantum measurement circuit (e.g., one or more readout resonators 114 and/or other quantum measurement devices). In some implementations, a pair ofPauli operators can be injected into a quantum circuit during free space in the quantum circuit (e.g., during idle time where the circuits are not acting on qubits during moments of gates), and the Pauli operators can be commuted through adjacent gates until the free space is filled. The one or more processors can then estimate the average value of the observable of interest 〈*O*〉*_{f}* based at least in part on the plurality of measurements.

According to additional aspects of the present disclosure, the one or more processors can further determine an approximation of a circuit fidelity *f*. An advantage provided by the single-point full depolarizing error mitigation scheme is that when a quantum circuit uses a randomly selected circuit gauge, one or more simplified methods to estimate the fidelity of the circuit *f* with a high probability can be used. For example, in one implementation, the gate or cycle fidelity measured for the classes of gates of a quantum circuit can be used, and the number of single and two qubit gates can be counted to measure the fidelity *f*. In some implementations, a component cross entropy benchmarking for a similar circuit structure can be used to determine an approximation of the circuit fidelity *f*.

Once the approximation of the circuit fidelity *f* is determined, a set of random gauges (possibly of size 1) of a circuit can be selected, and the one or more processors can determine an average expectation value of the observable of interest 〈*O*〉*_{f}* by averaging the plurality of measurements for the corresponding set of random gauges.

The one or more processors can then determine an inferred average value of the observable of interest 〈*O*〉*_{ψ}* based at least in part on the average value of the observable of interest 〈*O*〉*_{f}* and the approximation of the circuit fidelity *f*. For example, the formula ${\left〈O\right〉}_{f} = f {\left〈O\right〉}_{ψ} + \frac{\left(1-f\right)}{{2}^{n}} Tr \left[O\right]$ (1) can be used to determine the inferred average value of the observable of interest 〈*O*〉_{ψ}, where *O* is a desired observable and $\frac{\left(1-f\right)}{{2}^{n}} Tr \left[O\right]$ comprises a component attributable to noise. The inferred average value of the observable of interest 〈*O*〉*_{f}* can be an estimated noiseless value of an observable of interest 〈*O*〉*_{f}* determined using a single-point full depolarizing error model.

An advantage provided by the single-point full depolarizing error mitigation scheme is that additional sample points are not required, such as in a multi-point extrapolation error mitigation scheme. Thus, the raw number of required samples can be decreased as compared to extrapolation schemes which must converge to similar accuracies at several different points before extrapolation. Additionally, if a device is operating near the limit of its capabilities, a multi-point extrapolation scheme can require some method to increase the error systematically. In instances in which the error is increased beyond a threshold for obtaining a reasonable signal, the extrapolation scheme can become unstable.

The systems and methods of the present disclosure, however, may also be implemented in a multi-point extrapolation scheme. For example, the one or more processors can implement an error mitigation scheme for the quantum computing system 100 based at least in part on the average value of the observable of interest 〈*O*〉*_{ψ}* by implementing a multi-point extrapolation scheme. For example, a noise injection method can be selected along with a plurality of extrapolation points. In some implementations, the noise injection method can include implementing one or more additional Clifford gates and one or more corresponding inverses of the one or more additional Clifford gates during each of the one or more circuit gauges.

The one or more processors can then implement the multi-point extrapolation scheme by analyzing each of the plurality of extraction points with a different random circuit gauge of the one or more circuit gauges and extrapolating an inferred value of the observable of interest *O* based at least in part on the analysis of the plurality of extrapolation points.

In some implementations, a circuit gauge can be used to encourage a preferred error direction. For example, a circuit gauge can be known to cause a particular type of noise in a known direction. Such a circuit gauge can be used, for example, to introduce a known error type to be corrected using an error correction code.

For example, the one or more processors can implement an error mitigation scheme for the quantum computing system 100 based at least in part on the average value of the observable of interest 〈*O*〉*_{f}* by selecting a circuit gauge configured to implement a preferred error direction for error mitigation. The circuit gauge can be configured to implement a known error type. The one or more processors of can then correct the known error type using an error correction code.

The systems and methods of the present disclosure can allow for implementing an error mitigation scheme for the quantum computing system 100 based at least in part on the average value of the observable of interest 〈*O*〉*_{f}.* Further, the systems methods of the present disclosure can allow for determining an error corrected observable of interest *O* by correcting for a noise component of the plurality of measurements.

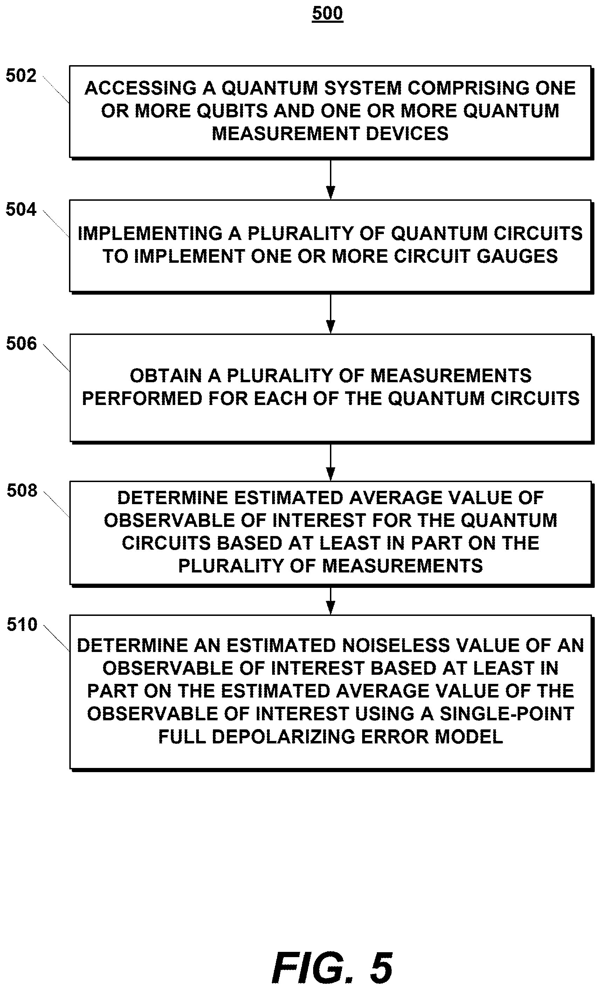

FIG. 5 depicts a flow diagram of an example method 500 according to example aspects of the present disclosure. The method 500 can be implemented using any suitable quantum computing system, such as the quantum computing system 100 depicted in FIG. 1. FIG. 5 depicts steps performed in a particular order for purposes of illustration and discussion.

At 502, the method 500 can include accessing a quantum system (e.g., the quantum system 110 and/or the quantum hardware 102 of FIG. 1). The quantum system can include one or more quantum system qubits and one or more quantum measurement devices. The quantum system can be configured to implement a plurality of quantum circuits. Each of the plurality of quantum circuits can be implemented by a different sequence of quantum gates as compared to each of the other quantum circuits in the plurality to thereby implement one or more circuit gauges.

At 504, the method 500 includes implementing a plurality of quantum circuits.
The plurality of quantum circuits are implemented by a different sequence of quantum gates as compared to each of the other quantum circuits in the plurality to implement one or more circuit gauges. In some implementations, the one or more circuit gauges can be one or more randomized circuit gauges. For example, one or more pairs of Pauli operators can be propagated through a quantum circuit. In some implementations, the one or more quantum circuits can include (e.g., incorporate) one or more Clifford gates. In some implementations, the one or more quantum circuits can include (e.g., incorporate) one or more non-Clifford gates.

At 506, the method 500 includes obtaining a plurality of measurements performed for the one or more quantum circuits. For example, quantum measurement device(s) (e.g., readout resonator(s)) can obtain one or more measurements for each of the one or more quantum circuits.

At 508, the method 500 includes determining an estimated average value of an observable of interest 〈*O*〉*_{f}* for the quantum circuits based at least in part on the plurality of measurements.

At 510, the method 500 includes determining an estimated noiseless value of an observable of interest 〈*O*〉*_{ψ}* based at least in part on the estimated average value of the observable of interest 〈*O*〉*_{f}* using a single-point full depolarizing error model. Alternatively, a multi-point extrapolation scheme is used.

Determining the estimated noiseless value of the observable of interest 〈*O*〉*_{ψ}* based at least in part on the estimated average value of the observable of interest 〈*O*〉*_{f}* using the single-point full depolarizing error model includes determining an approximation of a circuit fidelity *f* for the one or more circuit gauges. In some implementations, the approximation of the circuit fidelity *f* for the one or more circuit gauges can include a component cross entropy benchmarking for a similar circuit structure. In some implementations, the approximation of the circuit fidelity *f* for the one or more circuit gauges can include counting a number of single and two qubit gates in a circuit and using a circuit fidelity for those types of gates.

Determining the estimated noiseless value of the observable of interest 〈*O*〉*_{ψ}* based at least in part on the estimated average value of the observable of interest 〈*O*〉*_{f}* using the single-point full depolarizing error model further includes determining the inferred average value of the observable 〈*O*〉*_{ψ}* based at least in part on the average value of the observable of interest 〈*O*〉*_{f}* and the approximation of the circuit fidelity *f*.

Determining the inferred average value of the observable of interest 〈*O*〉*_{ψ}* based at least in part on the average value of the observable of interest 〈*O*〉*_{f}* and the approximation of the circuit fidelity *f* includes determining the inferred average value of the observable 〈*O*〉*_{ψ}* according to the formula ${\left〈O\right〉}_{f} = f {\left〈O\right〉}_{ψ} + \frac{\left(1-f\right)}{{2}^{n}} Tr \left[O\right]$ *,* where *O* is a desired observable and $\frac{\left(1-f\right)}{{2}^{n}} Tr \left[O\right]$ comprises a component attributable to noise.

Determining the estimated noiseless value of the observable of interest 〈*O*〉*_{ψ}* based at least in part on the estimated average value of the observable of interest 〈*O*〉*_{f}* using the single point full depolarizing error model can include determining an error corrected observable of interest *O* by correcting for a noise component of the plurality of measurements.

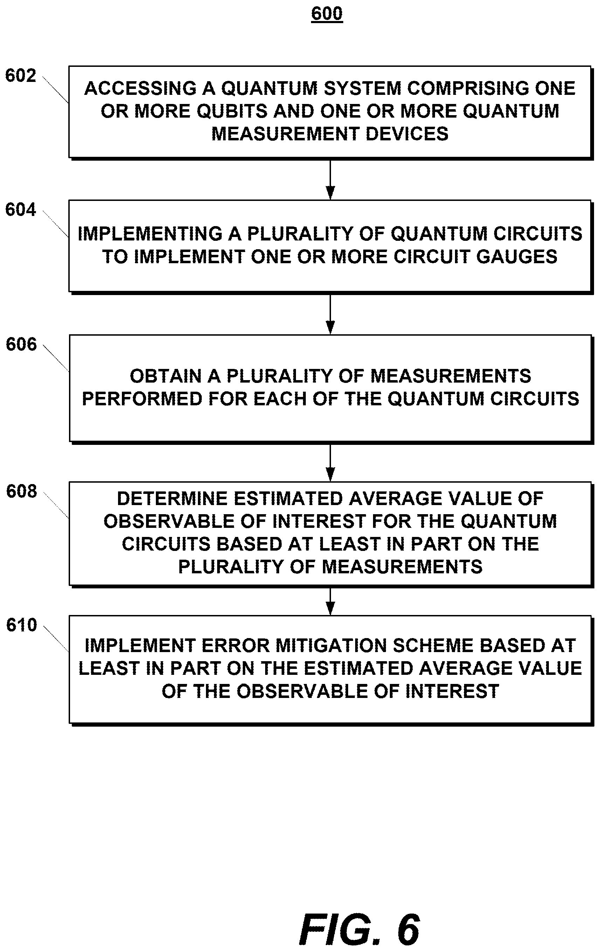

FIG. 6 depicts a flow diagram of an example method 600 according to example aspects of the present disclosure. The method 600 can be implemented using any suitable quantum computing system, such as the quantum computing system 100 depicted in FIG. 1. FIG. 6 depicts steps performed in a particular order for purposes of illustration and discussion.

At 602, the method 600 includes accessing a quantum system (e.g., the quantum system 110 and/or the quantum hardware 102 of FIG. 1). The quantum system can include one or more quantum system qubits and one or more quantum measurement devices. The quantum system can be configured to implement a plurality of quantum circuits. Each of the plurality of quantum circuits can be implemented by a different sequence of quantum gates as compared to each of the other quantum circuits in the plurality to thereby implement one or more circuit gauges.

At 604, the method 600 includes implementing a plurality of quantum circuits.
The plurality of quantum circuits can each be implemented by a different sequence of quantum gates as compared to each of the other quantum circuits in the plurality to implement one or more circuit gauges. In some implementations, the one or more circuit gauges can be one or more randomized circuit gauges. For example, one or more pairs of Pauli operators can be propagated through a quantum circuit. In some implementations, the one or more quantum circuits can include (e.g., incorporate) one or more Clifford gates. In some implementations, the one or more quantum circuits can include (e.g., incorporate) one or more non-Clifford gates. In some implementations, the one or more quantum circuits can include one or more quantum circuits configured to implement a preferred error direction for error mitigation.

At 606, the method 600 includes obtaining a plurality of measurements performed for the one or more quantum circuits. For example, quantum measurement device(s) (e.g., readout resonator(s)) can obtain one or more measurements for each of the one or more quantum circuits.

At 608, the method 600 includes determining an estimated average value of an observable of interest 〈*O*〉*_{f}* for the quantum circuits based at least in part on the plurality of measurements.

At 610, the method 600 can include implementing an error mitigation scheme for the quantum system based at least in part on the average value of the observable of interest 〈*O*〉*_{f}*. Either a single-point full depolarizing error mitigation scheme is used, or a multi-point extrapolation scheme. In some implementations, an error correction code can be used.

Implementations of the digital and/or quantum subject matter and the digital functional operations and quantum operations described in this specification can be implemented in digital electronic circuitry, suitable quantum circuitry or, more generally, quantum computational systems, in tangibly-implemented digital and/or quantum computer software or firmware, in digital and/or quantum computer hardware, including the structures disclosed in this specification and their structural equivalents, or in combinations of one or more of them. The term "quantum computing systems" may include, but is not limited to, quantum computers/computing systems, quantum information processing systems, quantum cryptography systems, or quantum simulators.

Implementations of the digital and/or quantum subject matter described in this specification can be implemented as one or more digital and/or quantum computer programs, i.e., one or more modules of digital and/or quantum computer program instructions encoded on a tangible non-transitory storage medium for execution by, or to control the operation of, data processing apparatus. The digital and/or quantum computer storage medium can be a machine-readable storage device, a machine-readable storage substrate, a random or serial access memory device, one or more qubits/qubit structures, or a combination of one or more of them. Alternatively or in addition, the program instructions can be encoded on an artificially-generated propagated signal that is capable of encoding digital and/or quantum information (e.g., a machine-generated electrical, optical, or electromagnetic signal) that is generated to encode digital and/or quantum information for transmission to suitable receiver apparatus for execution by a data processing apparatus.

The terms quantum information and quantum data refer to information or data that is carried by, held, or stored in quantum systems, where the smallest non-trivial system is a qubit, i.e., a system that defines the unit of quantum information. It is understood that the term "qubit" encompasses all quantum systems that may be suitably approximated as a two-level system in the corresponding context. Such quantum systems may include multi-level systems, e.g., with two or more levels. By way of example, such systems can include atoms, electrons, photons, ions or superconducting qubits. In many implementations the computational basis states are identified with the ground and first excited states, however it is understood that other setups where the computational states are identified with higher level excited states (e.g., qudits) are possible.

The term "data processing apparatus" refers to digital and/or quantum data processing hardware and encompasses all kinds of apparatus, devices, and machines for processing digital and/or quantum data, including by way of example a programmable digital processor, a programmable quantum processor, a digital computer, a quantum computer, or multiple digital and quantum processors or computers, and combinations thereof. The apparatus can also be, or further include, special purpose logic circuitry, e.g., an FPGA (field programmable gate array), or an ASIC (application-specific integrated circuit), or a quantum simulator, i.e., a quantum data processing apparatus that is designed to simulate or produce information about a specific quantum system. In particular, a quantum simulator is a special purpose quantum computer that does not have the capability to perform universal quantum computation. The apparatus can optionally include, in addition to hardware, code that creates an execution environment for digital and/or quantum computer programs, e.g., code that constitutes processor firmware, a protocol stack, a database management system, an operating system, or a combination of one or more of them.

A digital computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a digital computing environment. A quantum computer program, which may also be referred to or described as a program, software, a software application, a module, a software module, a script, or code, can be written in any form of programming language, including compiled or interpreted languages, or declarative or procedural languages, and translated into a suitable quantum programming language, or can be written in a quantum programming language, e.g., QCL, Quipper, Cirq, etc..

A digital and/or quantum computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A digital and/or quantum computer program can be deployed to be executed on one digital or one quantum computer or on multiple digital and/or quantum computers that are located at one site or distributed across multiple sites and interconnected by a digital and/or quantum data communication network. A quantum data communication network is understood to be a network that may transmit quantum data using quantum systems, e.g. qubits. Generally, a digital data communication network cannot transmit quantum data, however a quantum data communication network may transmit both quantum data and digital data.

The processes and logic flows described in this specification can be performed by one or more programmable digital and/or quantum computers, operating with one or more digital and/or quantum processors, as appropriate, executing one or more digital and/or quantum computer programs to perform functions by operating on input digital and quantum data and generating output. The processes and logic flows can also be performed by, and apparatus can also be implemented as, special purpose logic circuitry, e.g., an FPGA or an ASIC, or a quantum simulator, or by a combination of special purpose logic circuitry or quantum simulators and one or more programmed digital and/or quantum computers.

For a system of one or more digital and/or quantum computers or processors to be "configured to" or "operable to" perform particular operations or actions means that the system has installed on it software, firmware, hardware, or a combination of them that in operation cause the system to perform the operations or actions. For one or more digital and/or quantum computer programs to be configured to perform particular operations or actions means that the one or more programs include instructions that, when executed by digital and/or quantum data processing apparatus, cause the apparatus to perform the operations or actions. A quantum computer may receive instructions from a digital computer that, when executed by the quantum computing apparatus, cause the apparatus to perform the operations or actions.

Digital and/or quantum computers suitable for the execution of a digital and/or quantum computer program can be based on general or special purpose digital and/or quantum microprocessors or both, or any other kind of central digital and/or quantum processing unit. Generally, a central digital and/or quantum processing unit will receive instructions and digital and/or quantum data from a read-only memory, or a random access memory, or quantum systems suitable for transmitting quantum data, e.g. photons, or combinations thereof.

Some example elements of a digital and/or quantum computer are a central processing unit for performing or executing instructions and one or more memory devices for storing instructions and digital and/or quantum data. The central processing unit and the memory can be supplemented by, or incorporated in, special purpose logic circuitry or quantum simulators. Generally, a digital and/or quantum computer will also include, or be operatively coupled to receive digital and/or quantum data from or transfer digital and/or quantum data to, or both, one or more mass storage devices for storing digital and/or quantum data, e.g., magnetic, magneto-optical disks, or optical disks, or quantum systems suitable for storing quantum information. However, a digital and/or quantum computer need not have such devices.

Digital and/or quantum computer-readable media suitable for storing digital and/or quantum computer program instructions and digital and/or quantum data include all forms of non-volatile digital and/or quantum memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks; and quantum systems, e.g., trapped atoms or electrons. It is understood that quantum memories are devices that can store quantum data for a long time with high fidelity and efficiency, e.g., light-matter interfaces where light is used for transmission and matter for storing and preserving the quantum features of quantum data such as superposition or quantum coherence.

Control of the various systems described in this specification, or portions of them, can be implemented in a digital and/or quantum computer program product that includes instructions that are stored on one or more non-transitory machine-readable storage media, and that are executable on one or more digital and/or quantum processing devices. The systems described in this specification, or portions of them, can each be implemented as an apparatus, method, or electronic system that may include one or more digital and/or quantum processing devices and memory to store executable instructions to perform the operations described in this specification.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method (500) for noise error mitigation for a quantum system, comprising:
accessing (502), by a computing system comprising one or more computing devices (104), a quantum system (110) comprising one or more qubits and one or more quantum measurement devices;
implementing (504), by the quantum system, a plurality of quantum circuits, each quantum circuit comprising a plurality of quantum gates, each of the plurality of quantum circuits further comprising an equivalent logical operation as each of the other quantum circuits in the plurality of quantum circuits, each of the plurality of quantum circuits implemented by a different sequence of quantum gates as compared to each of the other quantum circuits in the plurality to thereby implement one or more circuit gauges;
obtaining (506), by the computing system via the one or more quantum measurement devices, a plurality of measurements (108) performed for each of the quantum circuits;
determining (508), by the computing system, an estimated average value of an observable of interest 〈*O*〉*_{f}* for the quantum circuits based at least in part on the plurality of measurements; and
implementing, by the computing system, an error mitigation scheme for the quantum system based at least in part on a single-point full depolarizing error mitigation scheme, wherein implementing the single-point full depolarizing error mitigation scheme comprises:
determining an approximation of a circuit fidelity *f* for the one or more circuit gauges; and
determining an inferred average value of an observable of interest 〈*O*〉*_{ψ}* based at least in part on a function of the estimated average value of the observable of interest 〈*O*〉*_{f}* and the approximation of the circuit fidelity *f,* wherein said determining the inferred average value further comprises determining the inferred average value of the observable 〈*O*〉*_{ψ}* according to the formula ${\left〈O\right〉}_{f} = f {\left〈O\right〉}_{ψ} + \frac{\left(1-f\right)}{{2}^{n}} Tr \left[O\right]$, where 0 is a desired observable, and $\frac{\left(1-f\right)}{{2}^{n}} Tr \left[O\right]$ comprises a component attributable to noise.

2. The method of claim 1, wherein the one or more circuit gauges comprise a circuit gauge configured to implement a preferred error direction for error mitigation.

3. A method (600) for noise error mitigation for a quantum system, comprising:
accessing (602), by a computing system comprising one or more computing devices (104), a quantum system (110) comprising one or more qubits and one or more quantum measurement devices;
implementing (604), by the quantum system, a plurality of quantum circuits, each quantum circuit comprising a plurality of quantum gates, each of the plurality of quantum circuits further comprising an equivalent logical operation as each of the other quantum circuits in the plurality of quantum circuits, each of the plurality of quantum circuits implemented by a different sequence of quantum gates as compared to each of the other quantum circuits in the plurality to thereby implement one or more circuit gauges, wherein the one or more circuit gauges comprise a circuit gauge configured to implement a preferred error direction for error mitigation;
obtaining (606), by the computing system via the one or more quantum measurement devices, a plurality of measurements (108) performed for each of the quantum circuits;
determining (608), by the computing system, an estimated average value of an observable of interest 〈*O*〉*_{f}* for the quantum circuits based at least in part on the plurality of measurements; and
implementing (610), by the computing system, an error mitigation scheme for the quantum system based at least in part on the average value of the observable of interest 〈*O*〉*_{f}* and implementing a multi-point extrapolation scheme comprising:
selecting a noise injection method and a plurality of extrapolation points;
analyzing each of the plurality of extrapolation points with a different random circuit gauge of the one or more circuit gauges; and
extrapolating an inferred value of the observable of interest 〈*O*〉*_{ψ}* based at least in part on the analysis of the plurality of extrapolation points.

4. The method of any of claims 1 to 3, wherein the one or more circuit gauges comprise one or more randomized circuit gauges, implemented by injecting one or more random pairs of Pauli operators into the one or more quantum circuits.

5. The method of claim 4, wherein injecting one or more random pairs of Pauli operators comprises incorporating one or more Clifford gates into the quantum circuits.

6. The method of claim 4, wherein injecting one or more random pairs of Pauli operators comprises incorporating one or more non-Clifford gates into the quantum circuits.

7. The method of any of claims 1, 2 or claims 4 to 6 when dependent on claim 1, wherein the approximation of the circuit fidelity *f* for the one or more circuit gauges comprises a component cross entropy benchmarking for a similar circuit structure.

8. The method of any of claims 1, 2 or claims 4 to 6 when dependent on claim 1, wherein determining the approximation of the circuit fidelity *f* for the one or more circuit gauges comprises counting a number of single and two qubit gates.

9. The method of any of claims 3 or 4 to 6 when dependent on claim 3, wherein the noise injection method comprises implementing one or more additional Clifford gates and one or more corresponding inverses of the one or more additional Clifford gates during each of the one or more circuit gauges.

10. The method of claims 1 or 2, wherein implementing the error mitigation scheme for the quantum computing system based at least in part on the average value of the observable of interest 〈*O*〉*_{f}* comprises biasing an error in a preferred direction during at least one of the one or more circuit gauges and correcting the error using an error correction code.

11. The method of any of claims 1-10, wherein implementing the error mitigation scheme for the quantum computing system based at least in part on the average value of the observable of interest 〈*O*〉*_{f}* comprises determining an error corrected observable of interest *O* by correcting for a noise component of the plurality of measurements.

12. A quantum computing system (100), comprising:
a quantum system (110) comprising one or more quantum system qubits, the quantum system being configured to implement a plurality of quantum circuits, each quantum circuit comprising a plurality of quantum gates, each of the plurality of quantum circuits further comprising an equivalent logical operation as each of the other quantum circuits in the plurality, each of the plurality of quantum circuits implemented by a different sequence of quantum gates as compared to each of the other quantum circuits in the plurality to thereby implement one or more circuit gauges;
a quantum measurement circuit implemented by the quantum computing system, the quantum measurement circuit operable to perform a plurality of measurements on the quantum circuits; and
a computing system comprising one or more devices, wherein the computing system and quantum system are operable to perform the method according to any of claims 1 to 11.

13. Computer-readable medium comprising instructions, which when executed by a computing apparatus, comprising a computing system and a quantum system (110), the quantum system comprising one or more qubits and one or more measurement devices, causes the computing apparatus to perform the method of any one of the claims 1-11 to be performed.

14. A computer program comprising instructions, which when executed by a computing apparatus, comprising a computing system and a quantum system (110), the quantum system comprising one or more qubits and one or more measurement devices, causes the computing apparatus to perform the method of any one of the claims 1-11.

## Patentansprüche

1. Verfahren (500) zur Rauschfehlerminderung für ein Quantensystem, umfassend:
Zugreifen (502) durch ein Rechensystem, umfassend eine oder mehrere Rechenvorrichtungen (104), auf ein Quantensystem (110), umfassend ein oder mehrere Qubits und eine oder mehrere Quantenmessvorrichtungen;
Implementieren (504) einer Mehrzahl von Quantenschaltungen durch das Quantensystem, wobei jede Quantenschaltung eine Mehrzahl von Quantengattern umfasst, wobei jede der Mehrzahl von Quantenschaltungen ferner eine äquivalente logische Operation wie jede der anderen Quantenschaltungen in der Mehrzahl von Quantenschaltungen umfasst, wobei jede der Mehrzahl von Quantenschaltungen durch eine andere Sequenz von Quantengattern im Vergleich zu jeder der anderen Quantenschaltungen in der Mehrzahl implementiert wird, um dadurch einen oder mehrere Schaltkreismesser zu implementieren;
Erhalten (506) einer Mehrzahl von Messungen (108), die für jede der Quantenschaltungen durchgeführt werden, durch das Rechensystem über die eine oder die mehreren Quantenmessvorrichtungen;
Bestimmen (508) eines geschätzten Mittelwerts einer interessierenden Observable 〈*O*〉*_{f}* durch das Rechensystem für die Quantenschaltungen basierend mindestens teilweise auf der Mehrzahl von Messungen; und
Implementieren eines Fehlerminderungsschemas für das Quantensystem durch das Rechensystem basierend mindestens teilweise auf einem einpunktigen, vollständig depolarisierenden Fehlerminderungsschema, wobei Implementieren des einpunktigen, vollständig depolarisierenden Fehlerminderungsschemas Folgendes umfasst:
Bestimmen einer Näherung einer Schaltungstreue *f* für einen oder mehrere Schaltkreismesser; und
Bestimmen eines abgeleiteten Mittelwerts einer interessierenden Observable 〈*O*〉*_{ψ}*, basierend mindestens teilweise auf einer Funktion des geschätzten Mittelwerts der interessierenden Observable 〈*O*〉*_{f}* und der Näherung der Schaltungstreue *f,* wobei das Bestimmen des abgeleiteten Mittelwerts ferner das Bestimmen des abgeleiteten Mittelwerts der Observable 〈*O*〉*_{ψ}* gemäß der Formel ${\left〈O\right〉}_{f} = f {\left〈O\right〉}_{Ψ} + \frac{\left(1-f\right)}{{2}^{n}} Tr \left[O\right]$ umfasst, wobei *O* eine gewünschte Observable ist und $\frac{\left(1-f\right)}{{2}^{n}} Tr \left[O\right]$ eine auf Rauschen zurückzuführende Komponente umfasst.

2. Verfahren nach Anspruch 1, wobei der eine oder die mehreren Schaltkreismesser einen Schaltkreismesser umfassen, der dazu konfiguriert ist, eine bevorzugte Fehlerrichtung zur Fehlerminderung zu implementieren.

3. Verfahren (600) zur Rauschfehlerminderung für ein Quantensystem, umfassend:
Zugreifen (602) durch ein Rechensystem, umfassend eine oder mehrere Rechenvorrichtungen (104), auf ein Quantensystem (110), umfassend ein oder mehrere Qubits und eine oder mehrere Quantenmessvorrichtungen;
Implementieren (604) einer Mehrzahl von Quantenschaltungen durch das Quantensystem, wobei jede Quantenschaltung eine Mehrzahl von Quantengattern umfasst, wobei jede der Mehrzahl von Quantenschaltungen ferner eine äquivalente logische Operation wie jede der anderen Quantenschaltungen in der Mehrzahl von Quantenschaltungen umfasst, wobei jede der Mehrzahl von Quantenschaltungen durch eine andere Sequenz von Quantengattern im Vergleich zu jeder der anderen Quantenschaltungen in der Mehrzahl implementiert wird, um dadurch einen oder mehrere Schaltkreismesser zu implementieren, wobei der eine oder die mehreren Schaltkreismesser einen Schaltkreismesser umfassen, das dazu konfiguriert ist, eine bevorzugte Fehlerrichtung zur Fehlerminderung zu implementieren;
Erhalten (606) einer Mehrzahl von Messungen (108), die für jede der Quantenschaltungen durchgeführt werden, durch das Rechensystem über die eine oder die mehreren Quantenmessvorrichtungen;
Bestimmen (608) eines geschätzten Mittelwerts einer interessierenden Observable 〈*O*〉*_{f}* durch das Rechensystem für die Quantenschaltungen basierend mindestens teilweise auf der Mehrzahl von Messungen; und
Implementieren (610) eines Fehlerminderungsschemas für das Quantensystem durch das Rechensystem basierend mindestens teilweise auf dem Mittelwert der interessierenden Observable 〈*O*〉*_{f}* und Implementieren eines Mehrpunkt-Extrapolationsschemas, umfassend:
Auswählen eines Rauschinjektionsverfahrens und einer Mehrzahl von Extrapolationspunkten;
Analysieren jedes der Mehrzahl von Extrapolationspunkten mit einem anderen zufälligen Schaltkreismesser des einen oder der mehreren Schaltkreismesser; und
Extrapolieren eines abgeleiteten Wertes der interessierenden Observable 〈*O*〉*_{ψ}*, basierend mindestens teilweise auf der Analyse der Mehrzahl von Extrapolationspunkten.

4. Verfahren nach einem der Ansprüche 1 bis 3, wobei der eine oder die mehreren Schaltkreismesser einen oder mehrere randomisierte Schaltkreismesser umfassen, die durch Injizieren eines oder mehrerer zufälliger Paare von Pauli-Operatoren in die eine oder die mehreren Quantenschaltungen implementiert werden.

5. Verfahren nach Anspruch 4, wobei Injizieren eines oder mehrerer zufälliger Paare von Pauli-Operatoren das Integrieren eines oder mehrerer Clifford-Gatter in die Quantenschaltungen umfasst.

6. Verfahren nach Anspruch 4, wobei Injizieren eines oder mehrerer zufälliger Paare von Pauli-Operatoren das Integrieren eines oder mehrerer Nicht-Clifford-Gatter in die Quantenschaltungen umfasst.

7. Verfahren nach einem der Ansprüche 1, 2 oder Ansprüche 4 bis 6 in Abhängigkeit von Anspruch 1, wobei die Näherung der Schaltungstreue *f* für den einen oder die mehreren Schaltkreismesser ein Komponenten-Kreuzentropie-Benchmarking für eine ähnliche Schaltungsstruktur umfasst.

8. Verfahren nach einem der Ansprüche 1, 2 oder Ansprüche 4 bis 6 in Abhängigkeit von Anspruch 1, wobei Bestimmen der Näherung der Schaltungstreue *f* für den einen oder die mehreren Schaltkreismesser das Zählen einer Anzahl von Einzel- und Zwei-Qubit-Gattern umfasst.

9. Verfahren nach einem der Ansprüche 3 oder 4 bis 6 in Abhängigkeit von Anspruch 3, wobei das Rauschinjektionsverfahren das Implementieren eines oder mehrerer zusätzlicher Clifford-Gatter und eines oder mehrerer entsprechender Inversen des einen oder der mehreren zusätzlichen Clifford-Gatter während jedem des einen oder der mehreren Schaltkreismesser umfasst.

10. Verfahren nach Anspruch 1 oder 2, wobei das Implementieren des Fehlerminderungsschemas für das Quantenrechensystem basierend mindestens teilweise auf dem Mittelwert der interessierenden Observable 〈*O*〉*_{f}* das Voreinstellen eines Fehlers in einer bevorzugten Richtung während mindestens einer des einen oder der mehreren Schaltkreismesser und das Korrigieren des Fehlers unter Verwendung eines Fehlerkorrekturcodes umfasst.

11. Verfahren nach einem der Ansprüche 1-10, wobei das Implementieren des Fehlerminderungsschemas für das Quantenrechensystem basierend mindestens teilweise auf dem Mittelwert der interessierenden Observable 〈*O*〉*_{f}* das Bestimmen einer fehlerkorrigierten interessierenden Observable *O* durch Korrigieren für eine Rauschkomponente der Mehrzahl von Messungen umfasst.

12. Quantenrechensystem (100), umfassend:
ein Quantensystem (110), umfassend ein oder mehrere Quantensystem-Qubits, wobei das Quantensystem dazu konfiguriert ist, eine Mehrzahl von Quantenschaltungen zu implementieren, wobei jede Quantenschaltung eine Mehrzahl von Quantengattern umfasst, wobei jede der Mehrzahl von Quantenschaltungen ferner eine äquivalente logische Operation wie jede der anderen Quantenschaltungen in der Mehrzahl umfasst, wobei jede der Mehrzahl von Quantenschaltungen durch eine andere Sequenz von Quantengattern im Vergleich zu jeder der anderen Quantenschaltungen in der Mehrzahl implementiert wird, um dadurch einen oder mehrere Schaltkreismesser zu implementieren;
eine Quantenmessschaltung, die durch das Quantenrechensystem implementiert wird, wobei die Quantenmessschaltung betreibbar ist, um eine Mehrzahl von Messungen an den Quantenschaltungen durchzuführen; und
ein Rechensystem, umfassend eine oder mehrere Vorrichtungen, wobei das Rechensystem und das Quantensystem betreibbar sind, um das Verfahren nach einem der Ansprüche 1 bis 11 durchzuführen.

13. Computerlesbares Medium, umfassend Anweisungen, die bei Ausführung durch eine Recheneinrichtung, umfassend ein Rechensystem und ein Quantensystem (110), wobei das Quantensystem ein oder mehrere Qubits und eine oder mehrere Messvorrichtungen umfasst, bewirken, dass die Recheneinrichtung das Verfahren nach einem der Ansprüche 1-11 durchführt.

14. Computerprogramm, umfassend Anweisungen, die bei Ausführung durch eine Recheneinrichtung, umfassend ein Rechensystem und ein Quantensystem (110), wobei das Quantensystem ein oder mehrere Qubits und eine oder mehrere Messvorrichtungen umfasst, bewirken, dass die Recheneinrichtung das Verfahren nach einem der Ansprüche 1-11 durchführt.

## Revendications

1. Procédé (500) d'atténuation des erreurs de bruit pour un système quantique, comprenant :
l'accès (502), par un système informatique comprenant un ou plusieurs dispositifs informatiques (104), à un système quantique (110) comprenant un ou plusieurs qubits et un ou plusieurs dispositifs de mesure quantiques ;
la mise en œuvre (504), par le système quantique, d'une pluralité de circuits quantiques, chaque circuit quantique comprenant une pluralité de portes quantiques, chacun de la pluralité de circuits quantiques comprenant en outre une opération logique équivalente à celle de chacun des autres circuits quantiques de la pluralité de circuits quantiques, chacun de la pluralité de circuits quantiques étant mis en œuvre par une séquence différente de portes quantiques par rapport à chacun des autres circuits quantiques de la pluralité afin de mettre en œuvre une ou plusieurs jauges de circuit ;
l'obtention (506), par le système informatique via les un ou plusieurs dispositifs de mesure quantiques, d'une pluralité de mesures (108) réalisées pour chacun des circuits quantiques ;
la détermination (508), par le système informatique, d'une valeur moyenne estimée d'une observable d'intérêt 〈*O*〉*_{f}* pour les circuits quantiques, sur la base au moins en partie de la pluralité de mesures ; et
la mise en œuvre, par le système informatique, d'un schéma d'atténuation des erreurs pour le système quantique sur la base au moins en partie d'un schéma d'atténuation des erreurs de dépolarisation totale à point unique, dans lequel la mise en œuvre du schéma d'atténuation des erreurs de dépolarisation totale à point unique comprend :
la détermination d'une approximation d'une fidélité de circuit f pour les une ou plusieurs jauges de circuit ; et
la détermination d'une valeur moyenne inférée d'une observable d'intérêt 〈*O*〉*_{ψ}* sur la base au moins en partie d'une fonction de la valeur moyenne estimée de l'observable d'intérêt 〈*O*〉*_{f}* et de l'approximation de la fidélité de circuit *f*, dans lequel ladite détermination de la valeur moyenne inférée comprend en outre la détermination de la valeur moyenne inférée de l'observable 〈*O*〉*_{ψ}* selon la formule ${\left〈O\right〉}_{f} = f {\left〈O\right〉}_{ψ} + \frac{\left(1-f\right)}{{2}^{n}} Tr \left[O\right]$*,* où *O* est une observable souhaitée et $\frac{\left(1-f\right)}{{2}^{n}} Tr \left[O\right]$ comprend une composante attribuable au bruit.

2. Procédé selon la revendication 1, dans lequel les une ou plusieurs jauges de circuit comprennent une jauge de circuit configurée pour mettre en œuvre une direction d'erreur préférée pour l'atténuation des erreurs.

3. Procédé (600) d'atténuation des erreurs de bruit pour un système quantique, comprenant :
l'accès (602), par un système informatique comprenant un ou plusieurs dispositifs informatiques (104), à un système quantique (110) comprenant un ou plusieurs qubits et un ou plusieurs dispositifs de mesure quantiques ;
la mise en œuvre (604), par le système quantique, d'une pluralité de circuits quantiques, chaque circuit quantique comprenant une pluralité de portes quantiques, chacun de la pluralité de circuits quantiques comprenant en outre une opération logique équivalente à celle de chacun des autres circuits quantiques de la pluralité de circuits quantiques, chacun de la pluralité de circuits quantiques étant mis en œuvre par une séquence différente de portes quantiques par rapport à chacun des autres circuits quantiques de la pluralité afin de mettre en œuvre une ou plusieurs jauges de circuit, dans lequel les une ou plusieurs jauges de circuit comprennent une jauge de circuit configurée pour mettre en œuvre une direction d'erreur préférée pour l'atténuation des erreurs ;
l'obtention (606), par le système informatique via les un ou plusieurs dispositifs de mesure quantiques, d'une pluralité de mesures (108) réalisées pour chacun des circuits quantiques ;
la détermination (608), par le système informatique, d'une valeur moyenne estimée d'une observable d'intérêt 〈*O*〉*_{f}* pour les circuits quantiques, sur la base au moins en partie de la pluralité de mesures ; et
la mise en œuvre (610), par le système informatique, d'un schéma d'atténuation des erreurs pour le système quantique sur la base au moins en partie de la valeur moyenne de l'observable d'intérêt 〈*O*〉*_{f}* et la mise en œuvre d'un schéma d'extrapolation multipoint comprenant :
la sélection d'un procédé d'injection de bruit et d'une pluralité de points d'extrapolation ;
l'analyse de chacun de la pluralité de points d'extrapolation avec une jauge de circuit aléatoire différente parmi les une ou plusieurs jauges de circuit ; et
l'extrapolation d'une valeur inférée de l'observable d'intérêt 〈*O*〉*_{ψ}* sur la base au moins en partie de l'analyse de la pluralité de points d'extrapolation.

4. Procédé selon l'une quelconque des revendications 1 à 3, dans lequel les une ou plusieurs jauges de circuit comprennent une ou plusieurs jauges de circuit aléatoires, mises en œuvre par l'injection d'une ou plusieurs paires aléatoires d'opérateurs de Pauli dans les un ou plusieurs circuits quantiques.

5. Procédé selon la revendication 4, dans lequel l'injection d'une ou plusieurs paires aléatoires d'opérateurs de Pauli comprend l'incorporation d'une ou plusieurs portes de Clifford dans les circuits quantiques.

6. Procédé selon la revendication 4, dans lequel l'injection d'une ou plusieurs paires aléatoires d'opérateurs de Pauli comprend l'incorporation d'une ou plusieurs portes non-Clifford dans les circuits quantiques.

7. Procédé selon l'une quelconque des revendications 1, 2 ou des revendications 4 à 6 lorsqu'elles dépendent de la revendication 1, dans lequel l'approximation de la fidélité de circuit f pour les une ou plusieurs jauges de circuit comprend une évaluation par entropie croisée de composants pour une structure de circuit similaire.

8. Procédé selon l'une quelconque des revendications 1, 2 ou des revendications 4 à 6 lorsqu'elles dépendent de la revendication 1, dans lequel la détermination de l'approximation de la fidélité de circuit *f* pour les une ou plusieurs jauges de circuit comprend le comptage d'un certain nombre de portes à un et deux qubits.

9. Procédé selon l'une quelconque des revendications 3 ou 4 à 6 lorsqu'elles dépendent de la revendication 3, dans lequel le procédé d'injection de bruit comprend la mise en œuvre d'une ou plusieurs portes de Clifford supplémentaires et d'une ou plusieurs inverses correspondantes des une ou plusieurs portes de Clifford supplémentaires pendant chacune des une ou plusieurs jauges de circuit.

10. Procédé selon les revendications 1 ou 2, dans lequel la mise en œuvre du schéma d'atténuation des erreurs pour le système informatique quantique sur la base au moins en partie de la valeur moyenne de l'observable d'intérêt 〈*O*〉_{f} comprend l'orientation d'une erreur dans une direction préférée pendant au moins l'une des une ou plusieurs jauges de circuit et la correction de l'erreur à l'aide d'un code de correction d'erreur.

11. Procédé selon l'une quelconque des revendications 1 à 10, dans lequel la mise en œuvre du schéma d'atténuation des erreurs pour le système informatique quantique sur la base au moins en partie de la valeur moyenne de l'observable d'intérêt 〈*O*〉*_{f}* comprend la détermination d'une observable d'intérêt *O* corrigée des erreurs en corrigeant une composante de bruit de la pluralité de mesures.

12. Système informatique quantique (100), comprenant :
un système quantique (110) comprenant un ou plusieurs qubits de système quantique, le système quantique étant configuré pour mettre en œuvre une pluralité de circuits quantiques, chaque circuit quantique comprenant une pluralité de portes quantiques, chacun de la pluralité de circuits quantiques comprenant en outre une opération logique équivalente à celle de chacun des autres circuits quantiques de la pluralité, chacun de la pluralité de circuits quantiques étant mis en œuvre par une séquence différente de portes quantiques par rapport à chacun des autres circuits quantiques de la pluralité afin de mettre en œuvre une ou plusieurs jauges de circuit ;
un circuit de mesure quantique mis en œuvre par le système informatique quantique, le circuit de mesure quantique étant utilisable pour réaliser une pluralité de mesures sur les circuits quantiques ; et
un système informatique comprenant un ou plusieurs dispositifs, dans lequel le système informatique et le système quantique sont utilisables pour réaliser le procédé selon l'une quelconque des revendications 1 à 11.

13. Support lisible par ordinateur comprenant
des instructions qui, lorsqu'elles sont exécutées par un appareil informatique comprenant un système informatique et un système quantique (110), le système quantique comprenant un ou plusieurs qubits et un ou plusieurs dispositifs de mesure, amènent l'appareil informatique à réaliser le procédé selon l'une quelconque des revendications 1 à 11.

14. Programme informatique comprenant des instructions qui, lorsqu'elles sont exécutées par un appareil informatique comprenant un système informatique et un système quantique (110), le système quantique comprenant un ou plusieurs qubits et un ou plusieurs dispositifs de mesure, amènent l'appareil informatique à réaliser le procédé selon l'une quelconque des revendications 1 à 11.
